# EUROPÄISCHE PATENTANMELDUNG

(11) **EP 1 312 488 A2**
(43) Veröffentlichungstag der Anmeldung: **21.05.2003**
(21) Anmeldenummer: 02450260.1
(22) Anmeldetag: 13.11.2002
(51) Int. Cl.: B60B 39/04

(54) **Streuanlage für ein Streugut**

(30) Priorität: 15.11.2001 AT 18002001
(71) Anmelder: Goldmann, Norbert, 31008 Elze (DE); Bartling, Luise, 31008 Elze (DE)
(72) Erfinder: Bartling, Werner, 31008 Elze (DE)
(74) Vertreter: Köhler-Pavlik, Johann, Dipl.-Ing.

(57) **Zusammenfassung**

Sandstreuanlage insbesondere für schienengebundene Fahrzeuge, mit einer durch einen Dosierkolben (2) geregelten Sandfluss. Um eine definierte Sandmengen-Dosierung des zugeführten Streugutes zu erreichen, ist der Dosierkolben (2) an einen Antriebsmotor (9) über eine vorgespannte Druckfeder (10) angeschlossen, deren Vorspannung durch eine Stellschraube (13) veränderbar ist. Hiebei ist die Stellschraube (13) an dem dem Dosierkolben (2) abgekehrten Ende der Antriebseinrichtung (9) angeordnet.

## Beschreibung

Die Erfindung betrifft eine Streuanlage für ein Dosiergut nach dem Oberbegriff des Anspruches 1.

Die Streuanlage ist vor allem zum Streuen von Sand bestimmt, kann aber auch für jedes andere Streugut, wie z.B. Salz od. dgl., verwendet werden.

Ziel der Erfindung ist die Schaffung einer Steuereinrichtung, mit welcher eine definierte Sandmengen-Dosierung erzielbar ist.

Bei der gegenständlichen Anlage ist eine funktionelle und räumliche Trennung zwischen Sand-Dosierung und einem Luftfördersystem vorgesehen. Hiebei ist die Sand-Dosier- und Absperreinrichtung als Absperreinrichtung gegen ungewollten Sandauslauf aus einem Sandvorratsbehälter bzw. als Sand-Dosier-Einrichtung zur definierten Sandmengenregelung ausgebildet, während die Einrichtung zur Förderung des Streugutes namentlich von Sand zur Aufgabestelle, im besonderen Fall zwischen Rad und Schiene, als kompakte Baugruppe mit Sandaufgabeinjektor ausgestattet ist, wobei letzterer für den Winterbetrieb allenfalls mit einer Heizpatrone oder anderer Heizeinrichtung ausgestattet sein kann. Dadurch kann ein Sand-Luftgemisch über einen Leitschlauch als gezielte Streumittelführung vom Sandaufgabeinjektor zum Rad-/Schienenspalt gebracht werden.

Eine Streuanlage der eingangs erwähnten Art ist durch die EP 378 066 A1 der Anmelder bekannt geworden. Bei dieser Anlage ist keine Vorkehrung getroffen, um den Sandauslauf genau einstellen zu können.

Es ist daher Aufgabe der Erfindung, bei einem optimalen Energieverbrauch, der vorzugsweise konstant bleiben soll, eine möglichst große Toleranzbreite im Mengenauswurf zu erreichen.

Diese Aufgabe wird bei einer Anlage der eingangs erwähnten Art erfindungsgemäß durch die Maßnahme nach Anspruch 1 gelöst.

Durch die Maßnahme nach Anspruch 2 ist auch eine Anpassung der Anlage an die jeweils verwendete Körnungsgröße des Streugutes möglich.

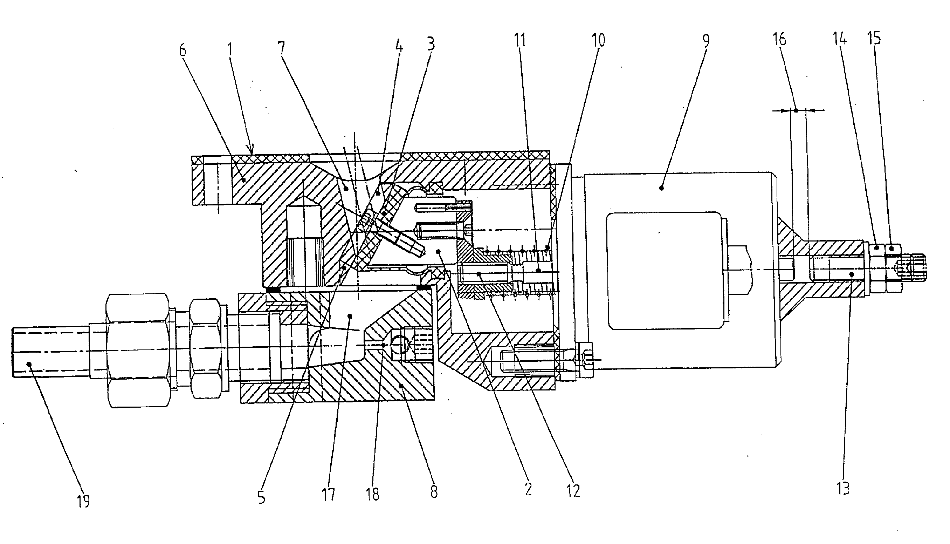

Die Erfindung wird nachfolgend anhand der Zeichnung näher erläutert, in welcher ein Ausführungsbeispiel einer Sandstreuanlage der erfindungsgemäßen Bauart im Längsschnitt dargestellt ist.

In der Zeichnung ist mit 1 eine Absperreinrichtung bezeichnet, welche als Sand-Dosier-Einrichtung dient und mit einem Dosierkolben 2 ausgestattet ist, der stirnseitig eine Dichtung 3 aufweist, die im vorliegenden Fall eine ringförmige Auskragung 4 aufweist, welche einen gegenüberliegenden, ebenfalls ringförmigen Vorsprung 5 der Gehäusewand 6 umschließt, in der ein von einem nicht dargestellten Vorratsbehälter kommende Kanal 7 das Streugut zu einer Austragseinrichtung 8 führt. Die Auskragung 4 und der Vorsprung 5 bilden einen Labyrinthkanal.

Der Dosierkolben 2 ist an seinem der Dichtung 3 abgekehrten Ende an eine Antriebseinrichtung, z.B. einen Motor, angeschlossen, welche im vorliegenden Fall ein Hubmagnet 9 ist. Zwischen Hubmagnet 9 und Dosierkolben 2 ist eine Druckfeder 10 geschaltet, welche einerseits einen Führungszapfen 11 des Hubmagnets 9 und anderseits einen Fortsatz 12 des Dosierkolbens 2 umschließt. Zur Regelung der Vorspannung der Druckfeder 10 dient eine Stellschraube 13 mit zwei Schraubensicherungen 14, 15, von welchen erstere für eine mittelfeste, und die zweite für eine hochfeste Einstellung dient. Der Einstellspalt ist mit 16 bezeichnet, innerhalb welchem die Toleranzbreite im Mengenauswurf regelbar ist.

Aus dem Zulaufkanal 7 gelangt das Streugut, nachdem der Dosierkolben 2 über die Dichtung 3 den Labyrinthspalt zwischen Auskragung 4 und Vorsprung 5 freigegeben hat, in eine Kammer 17 der Austragseinrichtung 8, aus welcher das Streugut über einen Injektor 18 einem Leitschlauch 19 zugeführt wird, welcher das Streugut im gegenständlichen Fall zwischen Rad und Schiene bringt.

Die Auskragung 4 und der Vorsprung 5 überdecken sich in der Weise, dass die Schlitzbreite des labyrinthförmigen Durchlasses zwischen null und einer maximalen Öffnung je nach Stellung des Dosierkolbens 2 regelbar ist, wodurch die Sandmenge dem Bedarf angepasst werden kann, wobei ein sicherer Sanddurchfluss in Abhängigkeit von der Sandqualität in der gewünschten Mengentoleranz erreichbar ist.

Selbstverständlich ist im Rahmen der Erfindung auch jede andere Anwendung der erfindungsgemäßen Streuanlage, z.B. bei anderen Fahrzeugen, anwendbar. Weiters besteht die Möglichkeit, die Dichtungsfläche des Dosierkolbens auch ohne Auskragung 4 und Vorsprung 5 der gegenüberliegenden Wand auszubilden bzw. in anderer Form zu gestalten.

## Patentansprüche

1. Streuanlage für ein Streugut, insbesondere Sandstreuanlage mit einer Dosiereinrichtung, welche mit einem Dosierkolben ausgstattet ist, der durch eine Antriebseinrichtung gesteuert ist, zwischen der und dem Dosierkolben eine vorgespannte Feder vorgesehen ist, wobei zur Änderung der Vorspannung der Feder eine Stellschraube dient, **dadurch gekennzeichnet, dass** die Stellschraube (13) an dem dem Dosierkolben (2) abgekehrten Ende der Antriebseinrichtung (9)angeordnet ist.

2. Streuanlage nach Anspruch 1, **dadurch gekennzeichnet, dass** zwischen Stellschraube (13) und Antriebseinrichtung (9) ein durch Verstellung der Stellschraube (13) steuerbarer Spalt (16) vorgesehen ist.
